# EUROPÄISCHE PATENTSCHRIFT

(11) **EP 2 836 855 B1**
(45) Veröffentlichungstag und Bekanntmachung des Hinweises auf die Patenterteilung: **28.08.2019**
(21) Anmeldenummer: 13714936.5
(22) Anmeldetag: 09.04.2013
(51) Int. Cl.: G01S 19/23

(54) **VORRICHTUNG ZUM EMPFANGEN VON TRÄGERFREQUENZEN UND CODES AUFWEISENDEN SIGNALEN**
DEVICE FOR RECEIVING SIGNALS WHICH HAVE CARRIER FREQUENCIES AND CODES
DISPOSITIF POUR RECEVOIR DES FRÉQUENCES PORTEUSES ET DES SIGNAUX PRÉSENTANT DES CODES

(30) Priorität: 10.04.2012 DE 102012205817
(43) Veröffentlichungstag der Anmeldung: 18.02.2015
(73) Patentinhaber: Deutsches Zentrum für Luft- und Raumfahrt e.V., 51147 Köln (DE)
(72) Erfinder: MEURER, Michael, 82205 Gilching (DE); CUNTZ, Manuel, 85221 Dachau (DE)
(74) Vertreter: dompatent von Kreisler Selting Werner - Partnerschaft von Patent- und Rechtsanwälten mbB
(86) Internationale Anmeldenummer: PCT/EP2013/057386
(87) Internationale Veröffentlichungsnummer: WO 2013/153061

(56) Entgegenhaltungen:
- WO-A1-2010/136498
- US-A1- 2008 107 155
- ANDRIY KONOVALTSEV ET AL: "Antenna and RF front end calibration in a GNSS array receiver", RF FRONT-ENDS FOR SOFTWARE DEFINED AND COGNITIVE RADIO SOLUTIONS (IMWS), 2010 IEEE INTERNATIONAL MICROWAVE WORKSHOP SERIES ON, IEEE, PISCATAWAY, NJ, USA, 22 February 2010 (2010-02-22), pages 1-4, XP031654062, ISBN: 978-1-4244-5751-9

## Beschreibung

Die Erfindung betrifft eine Vorrichtung zum Empfangen von Trägerfrequenzen und Codes aufweisenden Signalen, wobei es sich bei diesen Signalen um insbesondere von einem Satelliten ausgesendete Navigations- oder Kommunikationssignale handelt, wobei im Folgenden zur Erläuterung des Standes der Technik und der Erfindung auf Satellitennavigationssignale und Signalempfängern für diese Signale Bezug genommen wird.

In globalen Satellitennavigationssystemen (GNSSs) wie z.B. bei GPS (Global Positioning System) ermitteln die Empfänger ihre Ortsposition auf der Grundlage von empfangenen Signalen, die von Satelliten ausgesendet werden, welche Teil einer globalen Satellitenkonstellation sind. Die Satelliten, die zur GPS-Satellitenkonstellation gehören, senden ihre Signale auf mehreren Trägerfrequenzen aus. Jeder Träger ist mit wenigstens einer pseudozufälligen Binärcodesequenz PRN (pseudo random noise) moduliert, die aus einer scheinbar zufälligen, sich periodisch wiederholenden oder aus aperiodischen Sequenz von Nullen und Einsen besteht. Die PRN-Sequenzen werden auch als Ranging-Codes bezeichnet, da sie die Schätzung der Entfernungen ("Ranges") zwischen Empfänger und Satellit ermöglichen. Die verwendeten PRN-Codesequenzen zeichnen sich dadurch aus, dass sie eine eindeutige "Spitze" in der Autokorrelationsfunktion besitzen, was eine Laufzeitmessung ermöglicht.

Jeder Satellit benutzt eine eigene PRN-Codesequenz, weswegen der Empfänger das empfangene Signal demjenigen Satelliten zuordnen kann, der es ausgesendet hat. Der Empfänger berechnet den Unterschied zwischen dem Zeitpunkt, zu dem der Satellit das Signal ausgesendet hat, wobei diese Information im Signal selbst enthalten ist, und dem Zeitpunkt, zu dem der Empfänger selbst das Signal empfangen hat. Auf der Grundlage des zeitlichen Unterschiedes berechnet der Empfänger seine eigene Entfernung vom Satelliten. Der Empfänger kann seine eigene globale Ortsposition anhand der ermittelten Entfernungen zu mindestens vier Satelliten berechnen.

Zum Ermitteln des zeitlichen Unterschiedes zwischen dem genannten Sendezeitpunkt des Signals und dem genannten Empfangszeitpunkt dieses Signals synchronisiert der Empfänger eine lokal erzeugte PRN-Referenzcodesequenz mit der im empfangenen Signal enthaltenen PRN-Codesequenz. Auf diese Weise ermittelt der Empfänger das Maß der Zeitabweichung der lokal erzeugten PRN-Referenzcodesequenz in Bezug auf die Satellitenzeit und berechnet die Entfernung. Die Synchronisierungsoperationen enthalten die Akquisition der PRN-Codesequenz des Satelliten und deren Nachführung (Code-Tracking). Darüber hinaus wird normalerweise im Empfänger die Phase des Trägers nachgeführt, der vom Satelliten zum Aussenden der PRN-Codesequenz und der Navigationsdaten benutzt wird (Phase-Tracking).

Zurzeit wird ein neues Satellitennavigationssystem mit der Bezeichnung Galileo realisiert, das eine sehr hohe Genauigkeit und verschiedene Dienste anbietet. Die Entwicklung des neuen Satellitennavigationssystems Galileo eröffnet die Möglichkeit für neue Anwendungen, unter ihnen sogenannte Safety-of-Life-(SoL)Dienste. Für diese Dienste ist eine besondere Störsicherheit hinsichtlich Mehrwegeausbreitung und Interferenz notwendig. Eine technische Lösung hierfür sind Empfänger mit einer Gruppenantenne (Antennen-Array), d.h. einer aus mehreren Einzelantennen (Antennenelemente) bestehenden Mehr-Elemente-Antenne, und einer entsprechend ausgebildeten anschließenden Signalverarbeitung, z.B. adaptives Beamforming zur gezielten Störerunterdrückung.

Um eine zuverlässige und präzise Signalverarbeitung, insbesondere für DOA (Direction of Arrival)-Schätzung und adaptives Beamforming (Adaptive Nulling) zu erreichen, ist es notwendig, die den Einzelantennen der Gruppenantenne folgenden analogen Empfangssignalzweige einer Vorverarbeitungseinheit eines solchen Empfängers von Satellitennavigationssignalen in Phase und Amplitude genau zu kalibrieren.

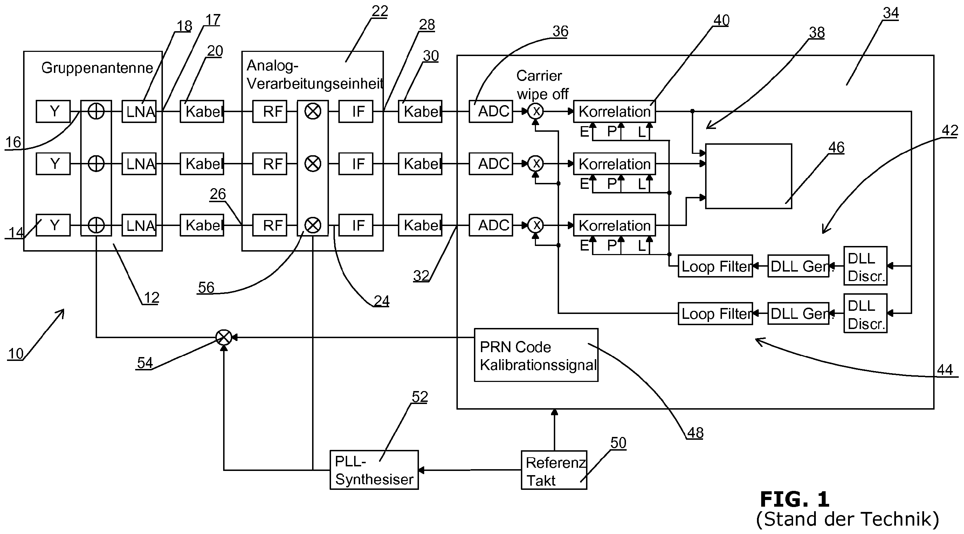

In WO-A-2010/136498 sind ein Verfahren und ein Empfänger zum Empfangen und Verarbeiten von Satellitennavigationssignalen beschrieben. Bei diesem bekannten Verfahren sowie Empfänger wird ein Kalibriersignal erzeugt, das wie die Satellitennavigationssignale aufgebaut ist, also ebenfalls eine PRN-Codesequenz und eine Trägerfrequenz aufweist. Ein Blockschaltbild des bekannten Navigationssignalempfängers ist in Fig. 1 gezeigt.

Der bekannte Empfänger 10 umfasst eine Gruppenantenne 12 mit mehreren in Array-Form angeordneten Einzelantennen 14, deren Antennenausgänge 16 mit den Eingängen von (Low Noise Amplifier - LNA) Verstärkern 18 verbunden sind. Die Ausgänge 17 dieser Verstärker sind über Kabel 20 mit einer Analog-Vorverarbeitungseinheit 22 verbunden, die verschiedene Signalverarbeitungseinheiten aufweist, auf die in diesem Zusammenhang nicht näher eingegangen werden soll und die genauer in WO-A-2010/136498 beschrieben sind. Die Analog-Vorverarbeitungseinheit 22 weist eine der Anzahl der Einzelantennen 14 gleichende Anzahl an Signalübertragungs- und -verarbeitungskanäle 24 auf. Die Signaleingänge 26 der Analog-Vorverarbeitungseinheit 22 sind über die Kabel 20 mit den Ausgängen der Verstärker 18 verbunden. Die Analog-Vorverarbeitungseinheit 22 selbst weist ebenfalls Signalausgänge 28 auf, die über Kabelverbindungen 30 mit den Eingängen 32 eines Digital-Signalprozessors 34 verbunden sind. Pro Kanal weist der Digital-Signalprozessor 34 einen Analog/Digital-Wandler 36 und Code-Akquisitionssowie Code- und Trägerfrequenz-Nachführeinheiten 38 mit Korrelations-Einheiten 40 und PLL/FLL- sowie DLL-Modulen 42,44 auf, die zur Ermittlung von Rohdaten zur Weiterverarbeitung in einer Signalverarbeitungseinheit 46 genutzt werden. Diese Verarbeitungstechnik ist an sich bekannt und soll hier nicht weiter erläutert werden.

In dem bekannten Navigationssignalempfänger 10 wird darüber hinaus ein Kalibriersignal erzeugt, das wie die Satellitennavigationssignale einen PRN-Code und eine Trägerfrequenz aufweist. Dieses Kalibriersignal wird in einer Kalibriersignal-Erzeugungseinheit 48 erzeugt. Der Digital-Signalprozessor 34 arbeitet bei einer Betriebsfrequenz, die von einer Referenzfrequenz-Erzeugungseinheit 50 erzeugt wird. Diese Einheit 50 steuert auch einen PLL-Synthesizer 52 an, dessen Ausgangssignal bei 54 zum Hochmischen des Kalibriersignals verwendet wird, so dass das Kalibriersignal eine Trägerfrequenz in den Trägerfrequenzbändern der Satellitennavigationssignale aufweist, und ferner zum Heruntermischen der empfangenen Satellitennavigationssignale in der Analog-Vorverarbeitungseinheit verwendet wird (siehe bei 56).

Die Empfangssignale von GNSS-Systemen am Empfänger sind sehr schwach. Die Empfangsleistung dieser Signale liegt im Bereich von lediglich einigen Femtowatt. Damit muss aber auch das im Navigationsempfänger erzeugte Kalibriersignal recht schwach sein, da es andernfalls die Navigationssignale "überdecken" würde. Das Kalibriersignal sowie die empfangenen Satellitennavigationssignale sind sehr anfällig gegenüber gezielter und ungezielter Störung. Gerade aber für die DOA-Schätzung und das adaptive Beamforming ist es wünschenswert, dass die Kalibrierung des Satellitennavigationsempfängers robust gegenüber Störsignalen ist.

Man könnte die Robustheit des Kalibriersignals erhöhen, indem z.B.
- längere Codes und Korrelationszeiten genutzt werden,
- die Bandbreite des Kalibriersignals erhöht wird und/oder
- die Leistung des Kalibriersignals erhöht wird.

All dies ist aber nur mit zusätzlichem Aufwand und/oder längeren Signalverarbeitungszeiten (Korrelationszeiten) realisierbar. Zeitliche Variationen des Kalibriersignals können unzureichend nachverfolgt werden. Im Falle gezielter Störung sind diese Maßnahmen häufig nutzlos.

Eine der Vorrichtung nach WO-A-2010/136498 ähnelnde Vorrichtung ist bekannt aus ANDRIY KONOVALTSEV ET AL: "Antenna and RF front end calibration in a GNSS array receiver", RF FRONT-ENDS FOR SOFTWARE DEFINED AND COGNITIVE RADIO SOLUTIONS (IMWS), 2010 IEEE INTERNATIONAL MICROWAVE WORKSHOP SERIES ON, IEEE, PISCATAWAY, NJ, USA, 22. Februar 2010 (2010-02-22), Seiten 1-4, XP031654062, ISBN: 978-1-4244-5751-9, bekannt, wobei bei dieser letztgenannten bekannten Vorrichtung im Signalprozessor durch adaptive Regelung ein Kalibriersignal erzeugt wird, das auf die von den Antennen empfangenen Satellitensignale aufmoduliert wird, um mittels adaptiver Regelung die Trägerfrequenz nachzustellen.

In US-A-2008/107155 ist ein Verfahren zur Kalibrierung der Leistung eines GSM-Antennenarray-Empfängers für jede von mehreren Frequenzen beim "Frequenz-Hopping" beschrieben. Dadurch soll sichergestellt werden, dass bei Empfang eines z. B. Notrufs der AOA (angle of arrival) bzw. die DOA (direction of arrival) zur Ortung des Notrufsenders ermittelt werden kann.

Aufgabe der Erfindung ist es, die Kalibrierung eines Navigationssignal- und/ oder Kommunikationssignalempfängers gegenüber Störsignalen robuster zu machen und die Genauigkeit zu erhöhen.

Zur Lösung dieser Aufgabe wird mit der Erfindung eine Vorrichtung zum Empfangen von Trägerfrequenzen und Codes aufweisenden Signalen vorgeschlagen, bei denen es sich um Navigations- oder Kommunikationssignale handelt, wobei die Vorrichtung versehen ist mit
- mehreren Einzelantennen zum Empfangen eines Signals, wobei jede Einzelantenne einen Antennenausgang aufweist, an dem das empfangene Signal ansteht,
- einer mit den Antennenausgängen der Einzelantennen verbundenen Analog-Vorverarbeitungseinheit zur Vorverarbeitung der von den Einzelantennen empfangenen Signale, wobei die Vorverarbeitungseinheit den Einzelantennen zugeordnete Signalübertragungs- und Signalvorverarbeitungskanäle mit jeweils einem Signaleingang und einem Signalausgang aufweist,
- einem über Signaleingänge mit den Signalausgängen der Signalübertragungs- und Signalvorverarbeitungskanälen der Vorverarbeitungseinheit verbundenen Digital-Signalprozessor zur Weiterverarbeitung der vorverarbeiteten Signale zwecks Signal-Akquisition und zwecks Nachführung der Trägerfrequenzen und Codes der empfangenen Signale durch Schätzen der Träger- und Codefrequenzen sowie deren Phasen in dem Digital-Signalprozessor,
- einer Kalibriersignal-Erzeugungseinheit zur Erzeugung eines Kalibriersignals, das wie die von den Einzelantennen empfangenen Signale eine Trägerfrequenz und einen Code aufweist und das zur Phasen- und Laufzeitkalibrierung der Signalübertragungspfade zwischen den Antennenausgängen der Einzelantennen und den Signaleingängen des Digital-Signalprozessors den an den Antennenausgängen der Einzelantennen anstehenden empfangenen Signalen überlagerbar ist,
- wobei in dem Digital-Signalprozessor eine Code-Akquisition für das Kalibriersignal erfolgt, und
- einer Referenzfrequenz-Erzeugungseinheit, die eine Referenzfrequenz erzeugt, mit der die Analog-Vorverarbeitungseinheit, der Digital-Signalprozessor und/oder die Kalibriersignal-Erzeugungseinheit betreibbar ist bzw. sind und/oder auf deren Basis andere, in einem vorgebbaren Verhältnis zur Referenzfrequenz stehende Betriebsfrequenzen zum Betreiben der Analog-Vorverarbeitungseinheit, des Digital-Signalprozessors und/ oder der Kalibriersignal-Erzeugungseinheit erzeugbar sind,
- wobei dem Digital-Signalprozessor ein digitalisiertes Signal, insbesondere ein digitalisiertes Sinussignal mit der Trägerfrequenz des Kalibriersignals oder mit einer anderen, in einem vorgebbaren Verhältnis zur Trägerfrequenz des Kalibriersignals stehenden Frequenz zuführbar und in dem Digital-Signalprozessor zur Trägerfrequenznachführung des Kalibriersignals als Ersatz für die Trägerfrequenz- und Trägerphasenschätzung nutzbar ist und
- wobei die Trägerfrequenz des Kalibriersignals bei Empfang von Störsignalen durch die Einzelantennen zufällig bzw. pseudofällig diskontinuierlich veränderbar ist.

Mit der Erfindung wird also sinngemäß vorgeschlagen, die Kalibriersignal-Erzeugungseinheit und die anderen Komponenten eines Navigations- oder Kommunikationssignalempfängers durch eine gemeinsame Referenzfrequenz zu betreiben. Hierdurch besteht dann ein fester Zusammenhang zwischen der Frequenz des erzeugten Kalibriersignals und des im Empfänger verarbeiteten, am Eingang des Digital-Signalprozessors empfangenen Kalibriersignals. Durch den festen Frequenzbezug bezüglich des Kalibriersignals kann nun vorteilhaft der Umstand genutzt werden, dass die exakte Trägerfrequenz bekannt ist und daher nicht mehr durch eine PLL/FLL (Trackingmodul) geschätzt werden muss. Dies eliminiert Fehler in der Trägerfrequenz- und Trägerphasenschätzung und erhöht somit die Messgenauigkeit. Geschätzt werden muss damit lediglich noch ein zeitlich nur sehr langsam sich verändernder Phasen-Offset zwischen den Kanälen, der beispielsweise auf Grund von potentiellen thermischen und mechanischen Einflüssen auf die Kabelverbindungen und die Analog-Vorverarbeitungseinheit zurückzuführen ist.

In weiterer vorteilhafter Ausgestaltung der Erfindung kann vorgesehen sein, dass dem Digital-Signalprozessor zur Codenachführung als Ersatz für die Codefrequenz- und Codephasenschätzung auch ein den Code des Kalibriersignals repräsentierendes, in der Kalibriersignal-Erzeugungseinheit erzeugtes Codereferenzsignal zuführbar ist. Bei dieser Variante der Erfindung kann somit in dem Digital-Signalprozessor auch auf eine Codefrequenz- und Codephasenschätzung verzichtet werden, indem für das Code-Trackingmodul ein Codereferenzsignal genutzt wird, das in der Kalibriersignal-Erzeugungseinheit generiert wird.

In vorteilhafter weiterer Ausgestaltung der Erfindung sind die Einzelantennen zu einer als bauliche Einheit ausgebildeten Gruppenantenne zusammengefasst. Die Komponenten dieser Gruppenantenne sind fest miteinander verbunden. Das bedeutet, dass eine zerstörungsfreie Demontage nicht möglich ist. In die Gruppenantenne ist ein Leitungsnetzwerk integriert, das der Einkopplung des Kalibriersignals direkt an den Ausgängen der Einzelantennen dient.

In weiterer vorteilhafter Ausgestaltung der Erfindung ist vorgesehen, dass der Digital-Signalprozessor durch Auswertung der über seine Signal-Eingänge empfangenen Kalibriersignale die Phasen-Offsets zwischen den Signalübertragungs- und Signalvorverarbeitungskanälen bestimmt.
Auf Grund des erfindungsgemäß vorgesehenen festen Frequenzbezuges der Trägerfrequenz und -phase des erzeugten Kalibriersignals sowie des am Eingang des Digital-Signalprozessors anstehenden empfangenen Kalibriersignals kann, wie oben beschrieben, auf ein Trackingmodul verzichtet werden. Dieser erfindungsgemäß vorgesehene feste Frequenzbezug bleibt auch erhalten, wenn die Trägerfrequenz des Kalibriersignals verändert wird. Das wiederum ist von Vorteil, um schnell auf Störsignale reagieren zu können bzw. um im Vorfeld Störungen der Kalibration bzw. des Kalibrierprozesses zu verhindern. Nach der Erfindung ist diesbezüglich vorgesehen, die Trägerfrequenz des Kalibriersignals zufällig bzw. pseudozufällig diskontinuierlich, d.h. sprunghaft, zu verändern. Dies erfolgt in Reaktion auf die Detektion einer Störung, kann aber auch prophylaktisch erfolgen.

Störsignale haben typischerweise eine vorgegebene spektrale Charakteristik. Weist diese zufällig oder absichtlich große Ähnlichkeit auf mit der spektralen Charakteristik der nach dem Stand der Technik zur Kalibration eingesetzten Signale auf (bei denen es sich beispielsweise um CDMA-Signale handelt), dann ist der Kalibrierprozess erheblich durch das Störsignal degradiert oder gar unmöglich. Zur weiteren Erhöhung der Robustheit der Kalibrierung wird daher bei der oben erläuterten Weiterbildung der Erfindung kein Kalibriersignal eingesetzt, das den empfangenen Satellitensignalen bzw. Nutzsignalen gleicht, sondern es wird ein Frequenzsprungsignal eingesetzt. Das Frequenzsprungkalibriersignal, das gemäß dieser Weiterentwicklung der Erfindung eingesetzt wird, verändert seine spektrale Charakteristik bei jedem Frequenzsprung. Zufällige Beeinträchtigungen durch Störsignale sind daher unwahrscheinlich bzw. maximal nur von kurzer Dauer (nämlich für die Verweildauer zwischen zwei Frequenzsprüngen). Durch den oben erläuterten, erfindungsgemäß vorgesehenen festen Frequenzbezug und die geringe Dynamik der vorgenannten Veränderungen des Phasen-Offsets (infolge von thermischen Einflüssen) sind derartige kurze Störperioden von geringem Effekt auf den Kalibrierprozess. Die Frequenzsprünge sind typischerweise pseudozufällig und daher üblicherweise für Außenstehende nicht prädizierbar. Im Ergebnis ist die gezielte Störung eines Frequenzsprungkalibriersignals nur sehr schwer möglich. Das Verfahren der Nutzung eines Frequenzsprungsignals lässt sich überdies durch Spreizbandmodulation des Frequenzsprungsignals sinnvoll erweitern und hinsichtlich seiner Robustheit weiter steigern.

Die wesentlichen Merkmale und Vorteile der Erfindung lassen sich kurz wie folgt zusammenfassen:
- Synchronisation zwischen Kalibriersignalgenerierung und Tracking/ Schätzen (durch die Korrelationseinheit) des Kalibriersignals,
- Verzicht auf PLL/FLL im Trackingmodul für das Kalibriersignal und lediglich Schätzen sich langsam verändernder Phasen-Offsets,
- optionaler Verzicht auf DLL (Schätzung der Codefrequenz und -phase) im Trackingmodul für das Kalibriersignal,
- Frequenzsprungsignal zur Kalibrierung, und zwar optional mit Spreizbandmodulation, womit ein sprunghaftes Wechseln des vom Kalibriersignal genutzten spektralen Bereichs ohne Unterbrechung des Kalibrierprozesses möglich ist,
- optionale (pseudo-)zufällige Frequenzsprungfolge und daher Unvorhersehbarkeit im Hinblick auf gezielte Störsignale.

Die Erfindung lässt sich insbesondere bei hochgenau arbeitenden Geodäsie-Empfängern mit mehreren Antennen, bei militärischen und hoheitlichen Navigationsempfängern und beispielsweise bei'Navigationsempfängern für sicherheitskritische Dienste wie beispielsweise GBAS (Ground Based Augmentation System) oder anderen Flugführungssystemen einsetzen.

Die Erfindung wird nachfolgend anhand zweier Ausführungsbeispiele sowie unter Bezugnahme auf die Zeichnung näher erläutert. Im Einzelnen zeigen dabei:
- Fig. 1: ein Blockschaltbild eines bekannten Navigationssignalempfängers,
- Fig. 2: ein erstes Ausführungsbeispiel eines Blockschaltbildes für einen Navigationssignalempfänger nach der Erfindung und
- Fig. 3: ein zweites Ausführungsbeispiel eines Blockschaltbildes für einen Navigationssignalempfänger nach der Erfindung.

Ein Blockschaltbild des bekannten Navigationssignalempfängers ist in Fig. 1 gezeigt.

Der bekannte Empfänger 100 umfasst eine Gruppenantenne 112 mit mehreren in Array-Form angeordneten Einzelantennen 114, deren Antennenausgänge 116 mit den Eingängen von (Low Noise Amplifier - LNA) Verstärkern 118 verbunden sind. Die Ausgänge 17 dieser Verstärker 118 sind über Kabel 120 mit einer Analog-Vorverarbeitungseinheit 122 verbunden, die verschiedene Signalverarbeitungseinheiten aufweist, auf die in diesem Zusammenhang nicht näher eingegangen werden soll und die genauer in WO-A-2010/136498 beschrieben sind. Die Analog-Vorverarbeitungseinheit 122 weist eine der Anzahl der Einzelantennen 114 gleichende Anzahl an Signalübertragungs- und - vorverarbeitungskanälen 124 auf. Die Signaleingänge 126 der Analog-Vorverarbeitungseinheit 122 sind über die Kabel 120 mit den Ausgängen 117 der Verstärker 118 verbunden. Die Analog-Vorverarbeitungseinheit 122 selbst weist ebenfalls Signalausgänge 128 auf, die über Kabelverbindungen 130 mit den Eingängen 132 eines Digital-Signalprozessors 134 verbunden sind. Pro Kanal weist der Digital-Signalprozessor 134 einen Analog/Digital-Wandler 136 und Code-Akquisitions- sowie Code- und Trägerfrequenz-Nachführeinheiten 138 mit Autokorrelationseinheiten 140 auf, die zur Ermittlung von Rohdaten zur Weiterverarbeitung in einer Signalverarbeitungseinheit 146 genutzt werden.

In dem Navigationssignalempfänger 100 wird darüber hinaus ein Kalibriersignal erzeugt, das wie die Satellitennavigationssignale einen PRN-Code und eine Trägerfrequenz aufweist. Dieses Kalibriersignal wird in einer Kalibriersignal-Erzeugungseinheit 148 erzeugt. Der Digital-Signalprozessor arbeitet bei einer Betriebsfrequenz, die von einer Referenzfrequenz-Erzeugungseinheit 150 erzeugt wird. Diese Einheit 150 steuert auch einen PLL-Synthesizer 152 an, dessen Ausgangssignal bei 154 zum Hochmischen des Kalibriersignals verwendet wird, so dass das Kalibriersignal eine Trägerfrequenz in den Trägerfrequenzbändern der Satellitennavigationssignale aufweist, und ferner zum Heruntermischen der empfangenen Satellitennavigationssignale in der Analog-Vorverarbeitungseinheit 122 verwendet wird (siehe bei 156).

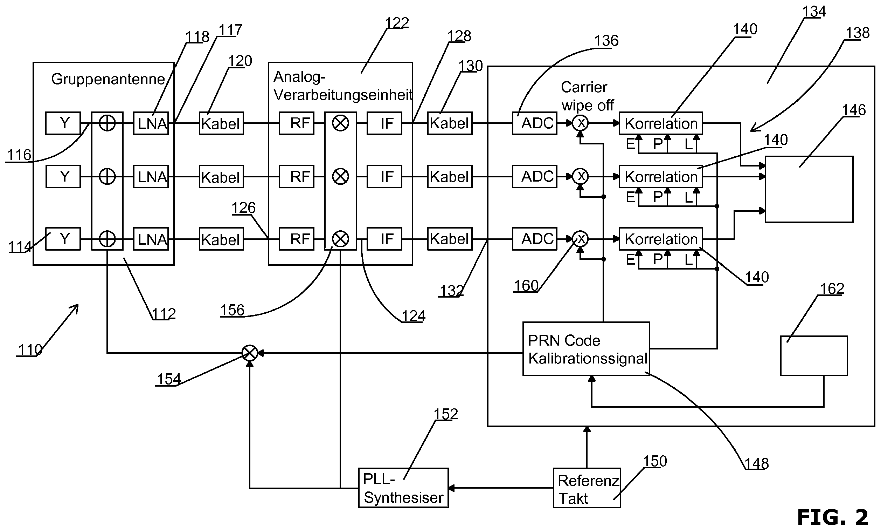

Die Besonderheit des Navigationssignalempfängers 100 gemäß Fig. 2 besteht in dem Verzicht auf die Trägerfrequenz- und Codeschätzung, wie sie für die Autokorrelationen in dem Digital-Signalprozessor 134 erfolgen. Erfindungsgemäß werden nämlich die Eigenschaften (Frequenz und Code) des in der Kalibriersignal-Erzeugungseinheit 148 erzeugten Kalibriersignals direkt in dem Digital-Signalprozessor 134 genutzt. Dazu wird ein Sinussignal mit einer Frequenz, die der Trägerfrequenz des Kalibriersignals entspricht, zur Durchführung des sogenannten "Carrier Wipe Off" verwendet. Dies ist in Fig. 2 bei 160 gezeigt. Auch wird der Code des Kalibriersignals als Referenzcode den Autokorrelationseinheiten 140 direkt zugeführt.

Zusätzlich ist in dem Blockschaltbild gemäß Fig. 2 bei 162 eine Frequenzsprung-Steuereinheit für die Kalibriersignal-Erzeugungseinheit 148 eingezeichnet. Mit dieser Frequenzsprung-Steuereinheit 162 lässt sich die Trägerfrequenz des Kalibriersignals zufällig bzw. pseudozufällig verändern, und zwar in Stufen, also diskontinuierlich. Durch dieses "Frequency Hopping" kann man Störern vorbeugen bzw. auf Störer reagieren, um den Kalibrierprozess weiter robuster zu machen.

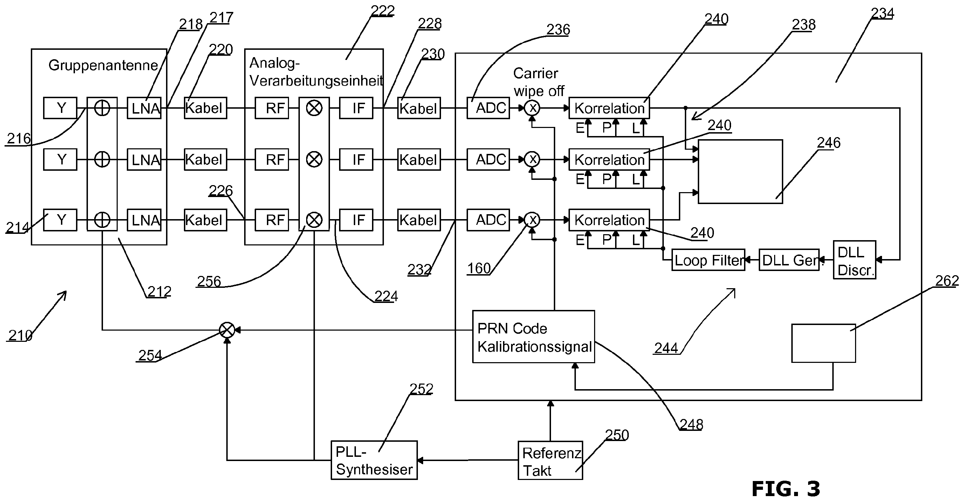

In Fig. 3 ist das Blockschaltbild eines zweiten Ausführungsbeispiels eines erfindungsgemäßen Navigationssignalempfängers gezeigt. Soweit die einzelnen Komponenten gemäß Blockschaltbild nach Fig. 3 denjenigen des Blockschaltbilds in Fig. 2 gleichen bzw. entsprechen, sind sie mit gegenüber den Bezugsziffern der Fig. 2 um 100 erhöhten Bezugsziffern gekennzeichnet.

Der einzige Unterschied der beiden Satellitennavigationsempfänger gemäß den Fign. 2 und 3 ist darin zu sehen, dass im Falle der Fig. 3 die Codefrequenz und -phase mit Hilfe eines DLL-Moduls 244 geschätzt wird, insoweit also der Digital-Signalprozessor 234 ein Trackingmodul für die Codefrequenz und -phase benötigt.

Die Erfindung wurde vorstehend unter Bezugnahme auf Satellitennavigationssignal als die Signale beschrieben, für die der erfindungsgemäße Empfänger ausgelegt ist. Grundsätzlich lässt sich auf Grund der Ähnlichkeit von Satellitennavigationssignal- und Kommunikationssignalsystemen die Erfindung auch auf Kommunikationssignalempfänger übertragen und bei solchen Empfängern anwenden. Auch dort kann die Kalibrierung einer Gruppenantenne mit mehreren arrayförmig angeordneten Einzelantennen von Vorteil sein und damit eine Kalibration erforderlich sein, um nämlich empfangene Kommunikationssignale in Abhängigkeit von ihrer DOA-Schätzung (nach einer Signalverarbeitung) wieder auszusenden.

## Patentansprüche

1. Vorrichtung zum Empfangen von Trägerfrequenzen und Codes aufweisenden Signalen, bei denen es sich um Navigations- oder Kommunikationssignale handelt, mit
- mehreren Einzelantennen (114) zum Empfangen eines Signals, wobei jede Einzelantenne (114) einen Antennenausgang (116) aufweist, an dem das empfangene Signal ansteht,
- einer mit den Antennenausgängen (116) der Einzelantennen (114) verbundenen Analog-Vorverarbeitungseinheit (122) zur Vorverarbeitung der von den Einzelantennen (114) empfangenen Signale, wobei die Vorverarbeitungseinheit (122) den Einzelantennen (114) zugeordnete Signalübertragungs- und Signalvorverarbeitungskanäle (124) mit jeweils einem Signaleingang (126) und einem Signalausgang (128) aufweist,
- einem über Signaleingänge (132) mit den Signalausgängen (128) der Signalübertragungs- und Signalvorverarbeitungskanälen (124) der Vorverarbeitungseinheit (122) verbundenen Digital-Signalprozessor (134) zur Weiterverarbeitung der vorverarbeiteten Signale zwecks Code-Akquisition und zwecks Nachführung der Trägerfrequenzen und Codes der empfangenen Signale durch Schätzen der Träger- und Codefrequenzen sowie deren Phasen in dem Digital-Signalprozessor (134),
- einer Kalibriersignal-Erzeugungseinheit (148) zur Erzeugung eines Kalibriersignals, das wie die von den Einzelantennen (114) empfangenen Signale eine Trägerfrequenz und einen Code aufweist und das zur Phasen- und Laufzeitkalibrierung der Signalübertragungspfade zwischen den Antennenausgängen (116) der Einzelantennen (114) und den Signaleingängen (132) des Digital-Signalprozessors (134) den an den Antennenausgängen (116) der Einzelantennen (114) anstehenden empfangenen Signalen überlagerbar ist,
- wobei in dem Digital-Signalprozessor (134) eine Code-Akquisition für das Kalibriersignal erfolgt, und
- einer Referenzfrequenz-Erzeugungseinheit (150), die eine Referenzfrequenz erzeugt, mit der die Analog-Vorverarbeitungseinheit (122), der Digital-Signalprozessor (134) und/oder die Kalibriersignal-Erzeugungseinheit (148) betreibbar ist bzw. sind und/oder auf deren Basis andere, in einem vorgebbaren Verhältnis zur Referenzfrequenz stehende Betriebsfrequenzen zum Betreiben der Analog-Vorverarbeitungseinheit (122), des Digital-Signalprozessors (134) und/oder der Kalibriersignal-Erzeugungseinheit (148) erzeugbar sind,
**dadurch gekennzeichnet ,**
- **dass** dem Digital-Signalprozessor (134) ein digitalisiertes Signal zuführbar ist, das die Trägerfrequenz des Kalibriersignals oder eine andere, in einem vorgebbaren Verhältnis zur Trägerfrequenz des Kalibriersignals stehende Frequenz repräsentiert,
- **dass** das besagte digitalisierte Signal in dem Digital-Signalprozessor (134) zur Trägerfrequenznachführung des Kalibriersignals als Ersatz für die Trägerfrequenz- und Trägerphasenschätzung nutzbar ist und
- **dass** die Trägerfrequenz des Kalibriersignals bei Empfang von Störsignalen durch die Einzelantennen (114) zufällig bzw. pseudozufällig diskontinuierlich veränderbar ist.

2. Vorrichtung nach Anspruch 1, **dadurch gekennzeichnet, dass** die Einzelantennen (114) zu einer als bauliche Einheit ausgebildeten Gruppenantenne (112) zusammengefasst sind, deren Komponenten nicht zerstörungsfrei demontierbar, fest miteinander verbunden sind, und dass die Gruppenantenne (112) ein integriertes Leitungsnetzwerk zur Einkopplung des Kalibriersignals direkt an den Ausgängen (116) der Einzelantennen (114) aufweist.

3. Vorrichtung nach Anspruch 1 oder 2, **dadurch gekennzeichnet, dass** der Digital-Signalprozessor (134) durch Auswertung der über seine Signal-Eingänge (132) empfangenen Kalibriersignale die Phasen-Offsets zwischen den Signalübertragungs- und Signalvorverarbeitungskanälen (124) bestimmt.

4. Vorrichtung nach einem der Ansprüche 1 bis 3, **dadurch gekennzeichnet, dass** dem Digital-Signalprozessor (134) auch ein den Code des Kalibriersignals repräsentierendes, in der Kalibriersignal-Erzeugungseinheit (148) erzeugtes Codereferenzsignal zuführbar und in dem Digital-Signalprozessor (134) zur Codenachführung als Ersatz für die Codefrequenz- und Codephasenschätzung nutzbar ist.

5. Vorrichtung nach einem der Ansprüche 1 bis 3, **dadurch gekennzeichnet, dass** in dem Digital-Signalprozessor (134) eine Nachführung des Codes für das Kalibriersignal erfolgt.

6. Vorrichtung nach einem der Ansprüche 1 bis 5, **dadurch gekennzeichnet, dass** das Kalibriersignal spreizbandmoduliert ist.

## Claims

1. A device for receiving signals having carrier frequencies and codes, said signals being navigation or communication signals, comprising
- a plurality of individual antennas (114) for receiving a signal, each individual antenna (114) having an antenna output (116) at which the received signal is present,
- an analog preprocessing unit (122) for preprocessing the signals received by the individual antennas (114), said analog preprocessing unit being connected to the antenna outputs (116) of the individual antennas (114) and including signal transmitting and signal preprocessing channels (124) assigned to the individual antennas (114), each of said preprocessing channels having a signal input (126) and a signal output (128),
- a digital signal processor (134) connected, via signal inputs (132), to the signal outputs (128) of the signal transmitting and signal preprocessing channels (124) of the preprocessing unit (122), for further processing of the preprocessed signals for the purpose of code acquisition and of tracking the carrier frequencies and codes of the received signals by estimation of the carrier and code frequencies and of their phases in the digital signal processor (134),
- a calibration signal generating unit (148) for generating a calibration signal which, like the signals received by the individual antennas (114), has a carrier frequency and a code and which, for calibration of the phase and of the propagation time of the signal transmission paths between the antenna outputs (116) of the individual antennas (114) and the signal inputs (132) of the digital signal processor (134), can be superimposed on the received signals present on the antenna outputs (116) of the individual antennas (114),
- wherein a code acquisition for the calibration signal is performed in the digital signal processor (134), and
- a reference frequency generating unit (150) generating a reference frequency with which the analog preprocessing unit (122), the digital signal processor (134), and/or the calibration signal generating unit (148) can be operated and/or on the basis of which other operating frequencies with a specifiable relationship to the reference frequency can be generated in order to operate the analog preprocessing unit (122), the digital signal processor (134), and/or the calibration signal generating unit (148),
**characterized in**
- **that** the digital signal processor (134) is adapted to have supplied to it a digitalized signal having the carrier frequency of the calibration signal or having another frequency with a specifiable relationship to the carrier frequency of the calibration signal,
- **that** said digitalized signal can be used in the digital signal processor (134) for carrier frequency tracking of the calibration signal as a substitute for the carrier frequency and carrier phase estimation, and
- **that**, upon receipt of interfering signals by the individual antennas (114), the carrier frequency of the calibration signal can be changed discontinuously in a random or pseudo-random manner.

2. The device according to claim 1, **characterized in that** the individual antennas (114) are combined into an antenna array (112) formed as a constructional unit, the components of said antenna array being not detachable in a nondestructive manner and being tightly connected to each other, and that said antenna array (112) comprises an integrated line network for incoupling the calibration signal directly at the outputs (116) of the individual antennas (114),

3. The device according to claim 1 or 2, **characterized in that** the digital signal processor (134) is operative, by evaluation of the calibration signals received via its signal inputs (132), to determine the phase offsets between the signal transmitting and signal processing channels (124).

4. The device according to any one of claims 1 to 3, **characterized in that** the digital signal processor (134) is further adapted to have supplied to it a code reference signal representing the code of the calibration signal and generated in the calibration signal generating unit (148), and that said code reference signal can be used in the digital signal processor (134) for code tracking as a substitute for the code frequency and code phase estimation.

5. The device according to any one of claims 1 to 3, **characterized in that**, in the digital signal processor (134), a tracking of the code for the calibration signal is performed.

6. The device according to any one of claims 1 to 5, **characterized in that** the calibration signal is spread-band-modulated.

## Revendications

1. Dispositif destiné à la réception de fréquences porteuses et de signaux comportant des codes, s'agissant de signaux de navigation et de communication, doté
- de plusieurs antennes individuelles (114) destinées à la réception d'un signal, dans lequel chaque antenne individuelle (114) comporte une sortie d'antenne (116), sur laquelle agit le signal reçu,
- d'une unité de prétraitement analogique (122) connectée aux sorties d'antenne (116) des antennes individuelles (114) destinée au prétraitement des signaux reçus par les antennes individuelles (114), dans lequel l'unité de prétraitement analogique (122) comporte des canaux de transmission de signal et de prétraitement de signal (124) ordonnés aux antennes individuelles (114) avec respectivement une entrée de signal (126) et une sortie de signal (128),
- d'un processeur de signal numérique (134) connecté aux sorties de signal (128) des canaux de transmission de signal et de prétraitement de signal (124) de l'unité de prétraitement analogique (122) par le biais d'entrées de signal (132), destiné au traitement ultérieur des signaux prétraités dans le processeur de signal numérique (134) en vue d'une acquisition de code et en vue d'un suivi des fréquences porteuses et codes des signaux reçus par estimation des fréquences porteuses et de code ainsi que des phases de celles-ci,
- d'une unité de génération d'un signal d'étalonnage (148) destinée à générer un signal d'étalonnage, qui comporte comme les signaux reçus depuis les antennes individuelles (114) une fréquence porteuse et un code et qui est superposable aux signaux reçus agissant sur les sorties d'antenne (116) des antennes individuelles (114) pour l'étalonnage des phases et des périodes des voies de transmission du signal entre les sorties d'antenne (116) des antennes individuelles (114) et les entrées de signal (132) du processeur de signal numérique (134),
- dans lequel une acquisition de code pour le signal d'étalonnage s'effectue dans le processeur de signal numérique (134), et
- d'une unité de génération d'une fréquence de référence (150), laquelle génère une fréquence de référence, avec laquelle l'unité de prétraitement analogique (122), le processeur de signal numérique (134) et/ou l'unité de génération d'un signal d'étalonnage (148) sont utilisables et/ou sur la base de laquelle peuvent être générées des fréquences de fonctionnement, proportionnelles à la fréquence de référence de manière pouvant être prédéfinie, destinées au fonctionnement de l'unité de prétraitement analogique (122), du processeur de signal numérique (134) et/ou de l'unité de génération d'un signal d'étalonnage (148),
**caractérisé en ce**
- **qu'**un signal numérisé peut alimenter le processeur de signal numérique (134), représentant la fréquence porteuse du signal d'étalonnage ou une autre fréquence proportionnelle à la fréquence de référence de manière pouvant être prédéfinie,
- **que** ledit signal numérisé est utilisable dans le processeur de signal numérique (134) pour le suivi de fréquence porteuse du signal d'étalonnage en tant que substitut pour l'estimation de la fréquence porteuse et de la phase porteuse et
- **que** la fréquence porteuse des signaux d'étalonnage peut être modifiée de manière discontinue aléatoirement ou pseudo-aléatoirement lors de la réception de signaux parasites par les antennes individuelles (114).

2. Dispositif d'après la revendication 1, **caractérisé en ce que** les antennes individuelles (114) sont assemblées en une antenne réseau (112) réalisée comme unité constructive, dont les composants ne sont pas démontables sans destruction, sont reliés l'un à l'autre de manière fixe et **en ce que** l'antenne réseau (112) comporte un réseau conducteur destiné au couplage du signal d'étalonnage directement aux sorties (116) des antennes individuelles (114).

3. Dispositif d'après la revendication 1 ou 2, **caractérisé en ce que** le processeur de signal numérique (134) détermine le décalage de phase entre les canaux de transmission de signal et les canaux de prétraitement du signal (124) par évaluation des signaux d'étalonnage reçus par le biais de ses entrées de signal (132).

4. Dispositif d'après l'une des revendications 1 à 3, **caractérisé en ce qu'**un signal de code de référence généré dans l'unité de génération d'un signal d'étalonnage (148) représentant le code du signal d'étalonnage peut alimenter le processeur de signal numérique (134) et être utilisé dans le processeur de signal numérique (134) pour le suivi des codes en tant que substitut pour l'estimation des fréquences de code et des phases de code.

5. Dispositif d'après l'une des revendications 1 à 3, **caractérisé en ce qu'**un suivi des codes pour le signal d'étalonnage s'effectue dans le processeur de signal numérique (134).

6. Dispositif d'après l'une des revendications 1 à 5, **caractérisé en ce que** le signal d'étalonnage est modulé par étalement de spectre.
